# EUROPÄISCHE PATENTSCHRIFT

(11) **EP 1 041 317 B1**
(45) Veröffentlichungstag und Bekanntmachung des Hinweises auf die Patenterteilung: **17.07.2002**
(21) Anmeldenummer: 99105810.8
(22) Anmeldetag: 23.03.1999
(51) Int. Cl.: F16H 63/30

(54) **Mitnahmekupplung in einem Schaltgestänge**
Drive connection in a shift linkage
Dispositif de liaison d'une tringlerie de changement de vitesse

(43) Veröffentlichungstag der Anmeldung: 04.10.2000
(73) Patentinhaber: Ford Global Technologies, Inc., A subsidiary of Ford Motor Company, Dearborn, Michigan 48126 (US)
(72) Erfinder: Bernhardt, Udo, 50259 Pulheim (DE); Doelling, Matthias, 51429 Bergisch Gladbach (DE); Chazotte, Jean-Pierre, 50996 Köln (DE); Deidewig, Hartmut, 51503 Roesrath (DE)
(74) Vertreter: Drömer, Hans-Carsten, Dipl.-Ing.

(56) Entgegenhaltungen:
- EP-A- 0 078 047
- EP-A- 0 170 630
- DE-A- 4 340 139
- FR-A- 2 221 763
- GB-A- 2 136 068

## Beschreibung

Die Erfindung bezieht sich auf eine Mitnahmekupplung in einem Schaltgestänge der im Oberbegriff des Patentanspruches 1 erläuterten Art.

Aus der DE 195 39 599 C2 ist eine Mitnahmekupplung in einem Schaltgestänge bekannt, bei der ein axial bewegbares Schaltbauteil über eine Kugel/Raste-Kupplung ein weiteres, hülsenförmiges Schaltbauteil teilweise betätigt mitnimmt.

Die bekannte Mitnahmekupplung in einem Schaltgestänge weist hierbei den Nachteil auf, daß sie nur zu einer kraftschlüssigen Verriegelung bzw. Kupplung der beiden miteinander zusammenwirkenden Schaltbauteile führt, wodurch eine erwünschte sequentielle Schaltweise nicht sichergestellt werden kann.

In der älteren Anmeldung EP-A-0 967 420, veröffentlicht am 29.12.1999, der Anmelderin ist bereits ein Vorschlag aufgezeigt, mit dem eine Mitnahmekupplung in einem Schaltgestänge der im Oberbegriff des Patentanspruches erläuterten Art derart verbessert werden kann, daß eine formschlüssige Verriegelung zum Sicherstellen einer sequentiellen Schaltbetätigung bereitgestellt werden kann.

Die dort vorgestellte Lösung in Form einer Kugelraste bringt jedoch fertigungs- und montagemäßige Schwierigkeiten mit sich.

Die Aufgabe der Erfindung ist es, eine Mitnahmekupplung in einem Schaltgestänge der im Oberbegriff des Patentanspruches erläuterten Art derart zu verbessern, daß sie mit geringem baulichen Aufwand und bei einfacher Montage eine formschlüssige Verriegelung zum Sicherstellen einer sequentiellen Schaltbetätigung bereitstellten kann.

Gemäß der Erfindung wird diese Aufgabe gelöst, indem bei einer Mitnahmekupplung in einem Schaltgestänge der im Oberbegriff des Patentanspruches 1 erläuterten Art, die im Kennzeichenteil des Patentanspruches aufgezeigten Merkmale vorgesehen werden.

Dadurch, daß das erste axial bewegliche Schaltbauteil ein eine hülsenförmige Nabe aufweisendes Schaltarmbauteil ist, das das zweite stangenförmige Schaltbauteil in Form einer Schaltstange in einer Bohrung verschiebbar aufnimmt, in der eine Ringnut mit einem nach außen federnden Federring angeordnet ist, das zweite Schaltbauteil eine Schaltstange ist, die eine Ringnut für den Federring, einen abgesetzten Abschnitt und einen Endabsatz aufweist, wobei der Endabsatz in einem im Getriebegehäuse festgelegten Hülsenbauteil verschiebbar aufgenommen ist, der in einer Ringnut einen nach innen federnden Federring aufweist, der mit dem abgesetzten Abschnitt und dem Endanschlag an der Schaltstange zusammenwirkt und das Hülsenbauteil mit sich axial zum ersten Schaltbauteil erstreckenden Fingern versehen ist, die in entsprechenden axialen Schlitzen in der hülsenförmigen Nabe gleitend aufgenommen sind und die radialen Innenseiten der Finger mit unterschiedlichen radial nach innen vorspringenden Rampen versehen sind, die den nach außen federnden Federring von außen her umfassen, kann eine zuverlässige Mitnahme der Schaltstange in der einen Richtung und eine Freigabe in der anderen Richtung sichergestellt werden.

Die Erfindung wird anhand eines in den Zeichnungen gezeigten Ausführungsbeispieles näher erläutert. Es zeigt:
- Fig. 1: einen Teilschnitt durch ein Wechselgetriebe eines Kraftfahrzeuges mit einer von einem Schaltarmbauteil selektiv betätigbaren Schaltstange mit der erfindungsgemäßen Mitnahmekupplung in dem in Strich-Punkt-Linien eingezeichneten Kreis A;
- Fig. 2: die Mitnahmekupplung in ihrer Neutralstellung;
- Fig. 3: die Mitnahmekupplung in ihrer Stellung bei eingerücktem fünften Gang;
- Fig. 4: die Mitnahmekupplung bei eingerücktem Rückwärtsgang und
- Fig. 5: einen um 90° gedrehten Schnitt durch die Mitnahmekupplung in ihrer Neutralstellung gemäß Fig. 2.

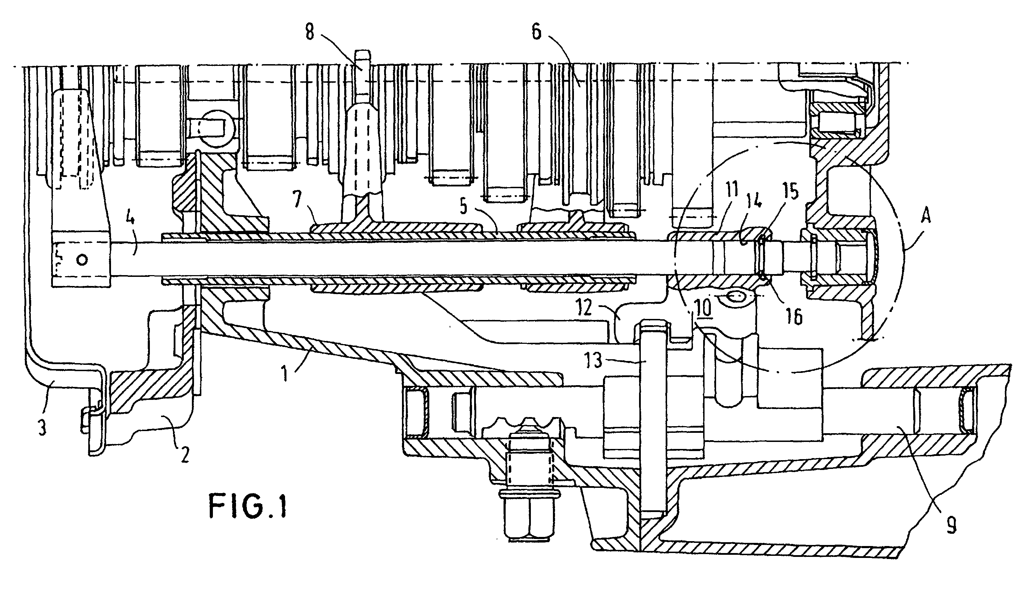

In Fig. 1 ist in einem teilweise gezeigten Getriebegehäuse 1 ein Wechselgetriebe mit vier Vorwärtsgängen und einem Rückwärtsgang durch ein Anbaugehäuse 2 und einem Deckel 3 zu einem Wechselgetriebe mit fünf Vorwärtsgängen und einem Rückwärtsgang erweitert worden und die Schaltung der nunmehr fünf Vorwärtsgänge und einem Rückwärtsgang soll weiterhin über eine einzige Schaltstange 4 erfolgen, auf der eine hohle Schaltstange 5 mit einer Schaltgabel 6 für den dritten und vierten Gang und auf dieser wieder eine Hülsennabe 7 für eine Schaltgabel 8 für den ersten und zweiten Gang angeordnet ist.

Da ein solches Wechselgetriebe in Transaxle-Bauweise für den Frontantrieb von Kraftfahrzeugen vorgesehen ist, ist die mögliche Baubreite sehr begrenzt und wird schon durch den hinzugefügten fünften Gang ausgeschöpft. Es muß somit sichergestellt werden, daß die von der Schaltwelle 9 über das Schaltarmbauteil 10 der Schaltstange 4 mitgeteilte Schaltbewegung zum Einrücken des Rückwärtsganges übertragen wird, daß jedoch die entgegengesetzte Schaltbewegung des Schaltarmbauteiles 10, mit der über eine eigene Hebelanordnung (nicht gezeigt) das Rückwärtsgangschieberad in seine Stellung für den eingelegten Rückwärtsgang verschoben wird, nicht auf die Schaltstange 4 übertragen wird.

Das Schaltarmbauteil 10 weist eine hülsenförmige Nabe 11 und einen Schaltarm 12 auf, der zum Eingriff mit einem Schaltfinger 13 an der Schaltwelle 9 vorgesehen ist.

Das Schaltarmbauteil 10 ist in seiner hülsenförmigen Nabe 11 mit einer Bohrung 14 versehen, in der es die Schaltstange 4 gleitend verschiebbar aufnimmt. In der Bohrung 14 ist eine Ringnut 15 mit einem nach innen und außen federnden Federring 16 angeordnet.

An der Schaltstange 4 ist im Bereich zweier Schlitze 17/18 eine Ringnut 19 angeordnet. Weiterhin ist ein abgesetzter Abschnitt 20 und ein Endabsatz 21 an der Schaltstange 4 ausgebildet.

In einer Bohrung im Getriebegehäuse 1 ist ein Hülsenbauteil 22 in geeigneter Weise festgelegt und nimmt den Endabsatz 21 der Schaltstange 4 verschiebbar gelagert auf. In dem Hülsenbauteil 22 ist in seiner Bohrung 23 in einer Ringnut 24 ein nach innen federnder Federring 25 angeordnet. Weiterhin weist das Hülsenbauteil 22 zwei sich axial erstreckende Finger 26/27 auf, die in die entsprechenden Schlitze 17/18 im Schaltarmbauteil 10 einragen.

Die sich axial erstreckenden Finger 26 und 27 des Hülsenbauteiles 22 sind hierbei mit drei unterschiedlichen, nach innen vorspringenden Rampen 28, 29 und 30 versehen, die mit dem abgesetzten Abschnitt 20 und dem Federring 16 an der Schaltstange 4 zusammenwirken, wie nachfolgend erläutert wird. (Siehe Fig. 5.)

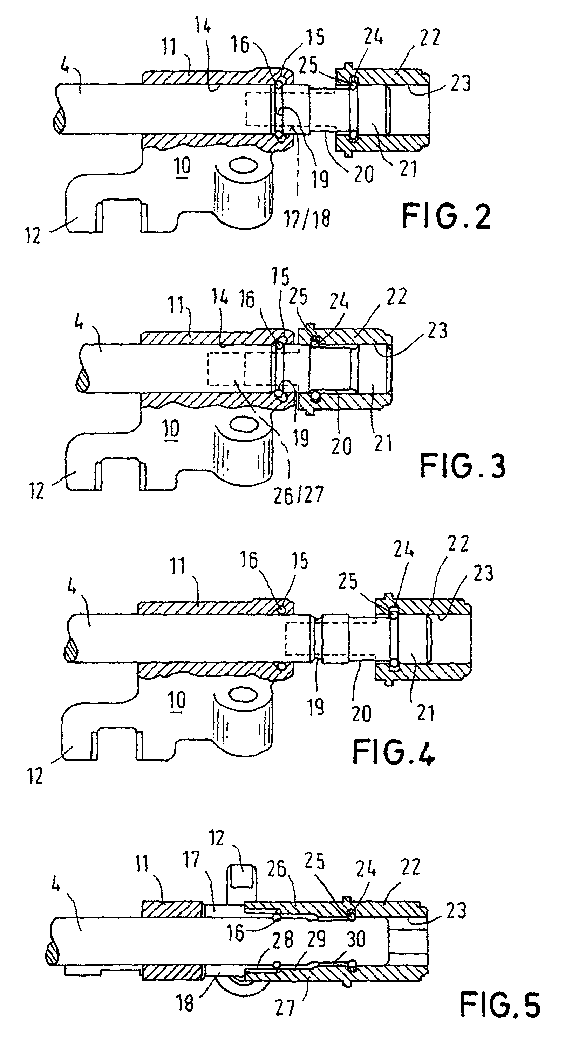

Die Funktionsweise wird in Zusammenhang mit einer Zusammenschau der Figuren 2 bis 5 näher erläutert.

Wie aus Fig. 2 ersichtlich ist, wird bei einer Bewegung des Schaltarmbauteiles 10 in Fig. 2 gesehen nach rechts, der nach innen federnde Federring 16 durch die Form der Ringnut 15 nach innen gedrängt und verriegelt hierdurch das Schaltarmbauteil 10 an der Schaltstange 4, so daß diese nach rechts hin mitgenommen wird und über die entsprechende Synchronkupplung der fünfte Gang eingelegt wird.

Durch den Abschnitt 20 wird der nach innen federnde Federring 25 nach außen gedrängt (in die Ringnut 24).

Bei einer Bewegung des Schaltarmbauteiles 10 aus der in Fig. 3 gezeigten Lage nach links wird die Schaltstange 4 wieder mitgenommen und dadurch der fünfte Gang ausgerückt und die Anordnung gelangt in die in Fig. 2 gezeigte Stellung.

Wird das Schaltarmbauteil 10 aus der in Fig. 2 gezeigten Stellung nach links bewegt, so wird die Schaltstange 4 durch in Anlagekommen des nach innen federnden Federringes 25 am Endabsatz 21 stationär festgehalten und der nach innen federnde Federring 16 kann in die Ringnut 15 im hülsenförmigen Teil 11 des Schaltabbauteiles 10 zurücktreten und gibt hierdurch eine Bewegung des Schaltarmbauteiles 10 frei, der zum Einrücken des Rückwärtsganges über eine getrennte Hebelanordnung verschoben werden kann, während die Schaltstange 4 stationär verbleibt.

Aus einer Betrachtung der Fig. 5 wird ersichtlich, daß die sich axial erstreckenden Finger 26/27 mit ihren Rampen 28, 29 und 30 die radial nach innen federnde Bewegung des Federringes 16 in der hülsenförmigen Nabe 11 des Schaltarmbauteiles 10 kontrollieren.

## Patentansprüche

1. Mitnahmekupplung in einem Schaltgestänge mit einem ersten, axial bewegbaren Schaltbauteil und einem über eine federnde Rastkupplung richtungsabhängig mit bewegbarem zweiten Schaltbauteil,
**dadurch gekennzeichnet, daß**
- das erste axial bewegliche Schaltbauteil ein Schaltarmbauteil (10) mit einer hülsenförmigen Nabe (11) ist, der in einer Bohrung (14) eine Ringnut (15) und einen nach innen und außen federnden Federring (16) aufnimmt,
- das zweite Schaltbauteil eine Schaltstange (4) ist, die in der Bohrung (14) verschiebbar angeordnet ist und eine Ringnut (19) für den Federring (16), einen abgesetzten Abschnitt (20) und einen Endabsatz (21) aufweist,
- der Endabsatz (21) in einer Bohrung (23), die in einem im Getriebegehäuse (1) festgelegten Hülsenbauteil (22) vorgesehen ist, verschiebbar aufgenommen ist und in der Bohrung (23) eine Ringnut (24) und ein nach innen federnder Federring (25) angeordnet ist und das Hülsenbauteil (22) weiterhin mit zwei sich axial zum ersten Schaltbauteil erstreckenden Fingern (26/27) versehen ist, die in entsprechenden Schlitze (17/18) in der hülsenförmigen Nabe (11) des Schaltarmbauteiles (10) gleitend aufgenommen sind und mit ihren radial nach innen vorspringenden Rampen (28, 29 und 30) die Funktion des Federringes (16) kontrollieren.

## Claims

1. Drive coupling in a shift linkage, with a first axially moveable shift component and with a second shift component co-moveable in a directionally dependent manner via a resilient catch coupling,
**characterized in that**
- the first axially moveable shift component is a shift-arm component (10) with a sleeve-shape hub (11) which receives, in a bore (14), an annular groove (15) and an inwardly and outwardly resilient spring ring (16),
- the second shift component is a shift rod (4) which is arranged displaceably in the bore (14) and has an annular groove (19) for the spring ring (16), a stepped portion (20) and an end step (21),
- the end step (21) is received displaceably in a bore (23), provided in a sleeve component (22) fixed in the transmission case (1), and an annular groove (24) and an inwardly resilient spring ring (25) are arranged in the bore (23), and the sleeve component (22) is also provided with two fingers (26/27) which extend axially towards the first shift component and which are received slideably in corresponding slots (17/18) in the sleeve-shaped hub (11) of the shift-arm component (10) and, with their ramps (28, 29 and 30) projecting radially inwards, control the functioning of the spring ring (16).

## Revendications

1. Liaison d'entraînement dans une tringlerie de changement de vitesse comprenant un premier composant de changement de vitesse mobile axialement et un deuxième composant de changement de vitesse pouvant se déplacer en même temps par le biais d'un accouplement à crans élastique en fonction de la direction,
**caractérisée en ce que**
- le premier composant de changement de vitesse mobile axialement est un composant de bras de changement de vitesse (10) avec un moyeu en forme de manchon (11), qui reçoit dans un alésage (14) une rainure annulaire (15) et une rondelle élastique (16) faisant ressort vers l'intérieur et l'extérieur,
- le deuxième composant de changement de vitesse est une tringle de changement de vitesse (4) qui est disposée de manière déplaçable dans l'alésage (14) et qui présente une rainure annulaire (19) pour la rondelle élastique (16), une portion en gradin (20) et un gradin d'extrémité (21),
- le gradin d'extrémité (21) est reçu de manière déplaçable dans un alésage (23) qui est prévu dans un composant de manchon fixé dans la boîte de vitesses (1) et une rainure annulaire (24) et une rondelle élastique (25) faisant ressort vers l'intérieur sont disposées dans l'alésage (23) et le composant de manchon (22) est en outre pourvu de deux doigts (26/27) s'étendant axialement vers le premier composant de changement de vitesse, lesquels sont reçus à coulissement dans des fentes correspondantes (17/18) dans le moyeu en forme de manchon (11) du composant de bras de changement de vitesse (10) et contrôlent la fonction de la rondelle élastique (16) avec leurs rampes saillant radialement vers l'intérieur (28, 29 et 30).
